# EUROPÄISCHE PATENTSCHRIFT

(11) **EP 2 284 480 B1**
(45) Veröffentlichungstag und Bekanntmachung des Hinweises auf die Patenterteilung: **27.08.2014**
(21) Anmeldenummer: 10185231.7
(22) Anmeldetag: 16.12.2005
(51) Int. Cl.: G01B 11/03, G01B 21/04

(54) **Koordinatenmessgerät sowie Verfahren zum Messen mit einem Koordinatenmessgerät**
Method for measuring with a coordinate measuring device and coordinate measuring device
Appareil de mesure de coordonnées et procédé de mesure à l'aide d'un appareil de mesure de coordonnées

(30) Priorität: 16.12.2004 DE 102004061151
(43) Veröffentlichungstag der Anmeldung: 16.02.2011
(62) Teilanmeldung aus: 10165895.3
(73) Patentinhaber: Werth Messtechnik GmbH, 35394 Giessen (DE)
(72) Erfinder: Christoph, Ralf, 35394 Gießen (DE); Rauh, Wolfgang, 35094 Lahntal-Goßfelden (DE); Andräs, Matthias, 61197, Florstadt (DE); Wachter, Uwe, 88094 Oberteuringen (DE)
(74) Vertreter: Stoffregen, Hans-Herbert

(56) Entgegenhaltungen:
- WO-A1-02/06765
- DE-A1- 19 747 027

## Beschreibung

Die Erfindung bezieht sich auf ein Verfahren zum Messen von Werkstückgeometrien mit einem Koordinatenmessgerät mit beweglichen Verfahrachsen und zumindest einer Bildverarbeitungssensorik mit Zoomoptik und einer in die Bildverarbeitungssensorik integrierten Laserabstandssensorik mit Laserabstandsoptik zur Erfassung von Messpunkten auf Werkstückoberflächen, wobei die Laserabstandsoptik und die Zoomoptik einen gemeinsamen Strahlengang verwenden.

Auch nimmt die Erfindung Bezug auf ein Koordinatenmessgerät zum Messen von Werkstückgeometrien, umfassend mehrere bewegliche Verfahrachsen und zumindest eine Bildverarbeitungssensorik mit Zoomoptik und einer integrierten Laserabstandssensorik mit Laserabstandsoptik zur Erfassung von Messpunkten auf zumindest einer Oberfläche des Werkstücks, wobei die Laserabstandsoptik und die Zoomoptik einen gemeinsamen Strahlengang bilden.

Unter Koordinatenmessgeräten werden Messgeräte mit einer oder mehreren mechanisch bewegten Achsen zur Messung von geometrischen Eigenschaften von Werkstücken bzw. Messobjekten verstanden. Diese Koordinatenmessgeräte sind mit Sensoren zur Aufnahme der geometrischen Messpunkte an den Werkstückoberflächen ausgestattet. Stand der Technik sind überwiegend Koordinatenmessgeräte mit rein taktilen Sensoren, d. h. der Messpunkt wird durch Berührung der Werkstückoberfläche mit einem taktilen Fühler erzeugt. Ebenfalls bekannt sind Koordinatenmessgeräte mit optischen Sensoren, bei denen die Messpunkte durch eine opto-elektronische Bildverarbeitung oder einen Laserabstandssensor ermittelt werden. Es sind ebenfalls Koordinatenmessgeräte bekannt, bei denen einzelne dieser Sensoren miteinander kombiniert werden und so erweiterte Möglichkeiten für den Anwender gegeben sind.

Ein Überblick über die Koordinatenmesstechnik ergibt sich aus den Literaturstellen DE.Z.: Die Bibliothek der Technik, Koordinatenmesstechnik im industriellen Einsatz, Verlag Moderne Industrie, Band 203 (ISBN 3-478-93212-2) sowie DE.Z.: Die Bibliothek der Technik, Multisensor Koordinatenmesstechnik, Verlag Moderne Industrie, Band 248 (ISBN 3-478-93290-4).

Ein Koordinatenmessgerät der eingangs genannten Art ist der WO 02/06765 A1 zu entnehmen.

Eine Multisensor-Tasteinrichtung ist aus der DE 197 47 027 A1 bekannt. Dabei durchsetzen der Strahlengang eines Videotasters und der eines Lasertasters ein gemeinsames Objektiv.

Immer wieder ist es festzustellen, dass das zum Einsatz gelangende Koordinatenmessgerät für die jeweilige Messaufgabe nicht optimal konfiguriert ist, so dass folglich mehrere Geräte verschiedener Bauarten notwendig sind.

Der vorliegenden Erfindung liegt die Aufgabe zugrunde, präzise Messungen der Werkstückgeometrien durchzuführen, insbesondere mit konstruktiver Vereinfachung des zum Einsatz gelangenden Koordinatenmessgeräts.

Zur Lösung wird verfahrensmäßig gemäß Anspruch 1 vorgeschlagen, dass in den gemeinsamen Strahlengang eine in dem Koordinatenmessgerät vorhandene Vorsatzoptik eingewechselt wird, über die Apertur und/oder Arbeitsabstand von Laserabstandssensorik und Bildverarbeitungssensorikoptik verändert wird. Insbesondere ist vorgesehen, dass der Arbeitsabstand der verwendeten Zoom-Optik verstellbar ist.

Dabei ist vorzugsweise vorgesehen, dass das optische System durch Einwechseln der Vorsatzoptik für den Betrieb der Laserabstandssensorik optimiert wird.

Bevorzugterweise kann das Vorsatzsystem über eine Magnetschnittstelle mit der Zoom-Optik verbunden werden.

Auch besteht die Möglichkeit, dass die Vorsatzoptik über einen auch für taktile Sensoren eingesetzten Tasterwechsler eingewechselt werden kann.

Ein erfindungsgemäßes Koordinatenmessgerät gemäß Anspruch 6 zeichnet sich dadurch aus, dass das Koordinatenmessgerät eine in den gemeinsamen Strahlengang wahlweise einwechselbare Vorsatzoptik aufweist. Insbesondere ist vorgesehen, dass Arbeitsabstand der verwendeten Zoom-Optik durch Verstellung von Linsengruppen ebenfalls verstellbar ist.

Das optische System durch Einwechseln der Vorsatzoptik kann für den Betrieb des Laserabstandssensors optimiert werden.

Bevorzugterweise ist die Vorsatzoptik über eine Magnetschnittstelle mit der Zoom-Optik verbunden.

Ferner besteht die Möglichkeit, dass die Vorsatzoptik über einen für taktile Sensoren eingesetzten Tasterwechsler passfähig ist.

Bei erfindungsgemäßen Koordinatenmessgeräten können Bildverarbeitungssensoren mit in den Strahlengang integrierten Lasersensoren zum Einsatz gelangen. Diese Strahlengänge können auch als Zoom-Optik ausgeführt sein. In einer weiteren Ausführung ist auch der Arbeitsabstand der verwendeten Zoom-Optik verstellbar. Bei praktisch eingesetzten Systemen ist zu erwarten, dass die gewünschten optischen Eigenschaften für den integrierten Laserabstandssensor und den Bildverarbeitungssensor nicht bei den gleichen Einstellparametern (Arbeitsabstand / Vergrößerung) vorliegen. Erfindungsgemäß können durch eine zusätzlich einwechselbare Vorsatzoptik Apertur und Arbeitsabstand des verwendeten Zoom-Optiksystems alternativ für den Lasersensor oder den Bildverarbeitungssensor optimiert werden. Dieses optische Zusatzsystem kann so ausgelegt sein, dass für den Lasersensor und den Bildverarbeitungssensor nicht die gleichen Einstellparameter (Arbeitsabstand / Vergrößerung) vorliegen. Durch eine zusätzlich einwechselbare Vorsatzoptik können Apertur und Arbeitsabstand des verwendeten Zoom-Optiksystems alternativ für den Lasersensor oder den Bildverarbeitungssensor optimiert werden. Dieses optische Zusatzsystem kann so ausgelegt sein, dass es für den Lasersensor optimierte Verhältnisse schafft. Es ist möglich, diesen Vorsatz über eine Magnetschnittstelle mit der Zoom-Optik zu verbinden und/oder über eine sonst für taktile Sensoren eingesetzte Tasterwechselstation ein- bzw. auszuwechseln.

Weitere Einzelheiten, Vorteile und Merkmale der Erfindung ergeben sich nicht nur aus den Ansprüchen, den diesen zu entnehmenden Merkmalen für sich und/oder in Kombination, sondern auch aus der nachfolgenden Beschreibung von der Zeichnung zu entnehmenden bevorzugten Ausführungsbeispielen.

Es zeigen:
- Fig. 1: eine Prinzipdarstellung eines Koordinatenmessgerätes,
- Fig. 2: einen Ausschnitt eines Koordinatenmessgerätes in Prinzipdarstellung,
- Fig. 3: eine Prinzipdarstellung eines Koordinatenmessgerätes mit Bildverarbeitungs- und Laserabstandssensor,
- Fig. 4: eine Anordnung zur Messung eines Werkzeuges, und
- Fig. 5: eine Messanordnung mit Bildverarbeitungssensor und Laserabstandssensor.

Die Erfindung bzw. Erfindungskomplexe werden nachstehend an bevorzugten Ausführungsbeispielen näher erläutert.

Die entsprechenden Ausführungen erfolgen dabei vor dem Hintergrund, dass Kenntnisse der Koordinatenmesstechnik präsent sind. Ergänzend wird insoweit auf die Literaturstellen DE.Z.: Die Bibliothek der Technik, Koordinatenmesstechnik im industriellen Einsatz, Verlag Moderne Industrie, Band 203 (ISBN 3-478-93212-2) sowie DE.Z.: Die Bibliothek der Technik, Multisensor Koordinatenmesstechnik, Verlag Moderne Industrie, Band 248 (ISBN 3-478-93290-4) verwiesen, auf die ausdrücklich Bezug genommen wird und deren Inhalte zum Offenbarungsgehalt der Beschreibung gehören.

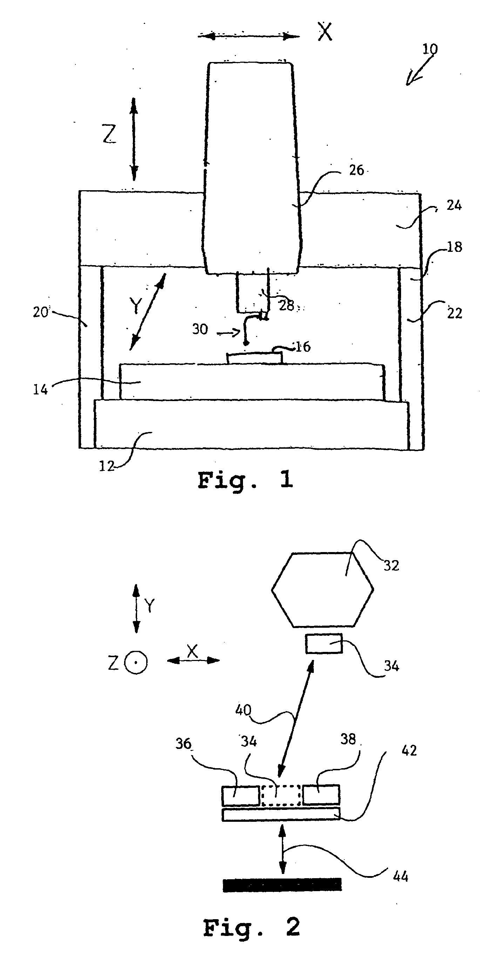

In Fig. 1 ist rein prinzipiell ein Koordinatenmessgerät 10 dargestellt, das mit dem für die jeweilige Lösung einer Messaufgabe erforderlichen Sensor bzw. den erforderlichen Sensoren ausgestattet ist. Die Sensoren können wahlweise montiert oder demontiert werden oder über entsprechende Sensorwechselsysteme auch während des Betriebes automatisch ein- und ausgewechselt werden. Hierdurch ist ein flexibles Messen komplexer Werkstückgeometrien möglich. Selbstverständlich wird die Erfindung nicht verlassen, wenn eine entsprechende Anzahl von ausgewählten Sensoren fest auf dem Gerät montiert gelassen wird, um in dieser Konfiguration Objekte zu messen.

Das hinlänglich bekannte und noch einmal in der Fig. 1 wiedergegebene Prinzip eines Koordinatenmessgerätes 10 umfasst einen z. B. aus Granit bestehenden Grundrahmen 12 mit Messtisch 14, auf dem ein zu messendes Objekt 16 positioniert wird, um dessen Oberflächeneigenschaften zu messen.

Entlang dem Grundrahmen 12 ist ein Portal 18 in Y-Richtung verstellbar. Hierzu sind Säulen oder Ständer 20, 22 gleitend am Grundrahmen 12 abgestützt. Von den Säulen 20, 22 geht eine Traverse 24 aus, entlang der ein Schlitten verfahrbar ist, der seinerseits eine Pinole oder Säule 26 aufnimmt, die in Z-Richtung verstellbar ist. Von der Pinole 26 bzw. ggfs. einer mit der Pinole 26 verbundenen Wechselschnittstelle 28 geht ein Sensor 30 aus, der im Ausführungsbeispiel als taktiler Sensor ausgebildet ist, der dann, wenn die Pinole 26 einen Bildverarbeitungssensor enthält, taktil-optisch misst. Insoweit wird jedoch auf hinlänglich bekannte Techniken verwiesen, genauso wie in Bezug auf weitere zum Einsatz gelangende Sensoren wie Laserabstandssensor, Weißlichtinterferometer, Bildverarbeitungssensoren, Röntgensensorik oder chromatischer Fokussensor oder konfokaler Scanning-Messkopf, ohne dass hierdurch eine Einschränkung der erfindungsgemäßen Lehre erfolgt. Der bzw. die Sensoren werden entsprechend der Messaufgabe ausgewählt und eingesetzt, um das Koordinatenmessgerät 10 für die jeweilige Messaufgabe optimal zu konfigurieren. Gleichzeitig werden Probleme gelöst, die bei üblichen Koordinatenmessgeräten auftreten.

Um das Koordinatenmessgerät 10 mit dem geeigneten Sensor nutzen zu können, kann das Koordinatenmessgerät einen Sensorwechsler aufweisen, wie dies prinzipiell der Fig. 2 zu entnehmen ist. So können mehrere Sensoren jeweils wahlweise über eine Wechselschnittstelle mit dem Koordinatenmessgerät versehen und von Hand oder durch automatisches Abholen des Koordinatenmessgerätes an einer Parkstation ausgewechselt werden.

In Fig. 2 ist ein Ausschnitt eines Koordinatenmessgerätes mit einer Pinole 32 in Draufsicht wiedergegeben. Die mit der Pinole verbindbaren Sensoren sind mit den Bezugszeichen 34, 36, 38 gekennzeichnet. Dabei können die Sensoren 34, 36, 38 optisch oder taktil ausgeführt sein, um nur beispielhaft Sensorarten zu nennen. Das Koordinatenmessgerät, d. h. die Pinole 32 ist in Y-X-Z-Richtung derart verstellbar, um einen Austausch der Sensoren 34, 36, 38 vorzunehmen. Im Ausführungsbeispiel positioniert die Pinole 32 und somit das Koordinatenmessgerät auf einem Positionierweg 40 den Sensor 34 in eine Parkstation 42 und ist sodann in der Lage, einen der in der Parkstation 42 abgelegten Sensoren 36, 38 aufzunehmen und wieder an der Pinole 32 anzubringen. Die Parkstation 42 bzw. das Tasterwechslersystem kann durch eine Verstellachse 44 so verstellt werden, dass der Tasterwechsler 42 bei Nichtbetrieb außerhalb des Messvolumens des Koordinatenmessgerätes angeordnet ist.

Bei Anwendung von Bildverarbeitungssensoren in Koordinatenmessgeräten ist es für den Anwender erforderlich, verschiedene Vergrößerungen einzustellen. Dem widerspricht die Forderung nach kostenoptimierten optischen Systemen sowie hohen Abbildungsgüten, die mit den sonst erforderlichen Zoom-Optiken nur schwer zu erreichen sind. Um diesen Forderungen zu genügen ist vorgesehen, dass die Kamera des Bildverarbeitungssensors mit einer größeren Auflösung (Pixelanzahl) gewählt wird, als die Auflösung des verwendeten Monitors bzw. des für die Bilddarstellung verwendeten Monitorausschnitts. Im Weiteren kann die Kamera mit wahlfreiem Zugriff auf bestimmte Ausschnitte des Gesamtbildes ausgestattet sein. Es ist dann möglich, dass im Live-Bild oder Beobachtungsbild des Koordinatenmessgerätes nur ein Ausschnitt des Gesamtbildes dargestellt wird, der auf das Format des jeweiligen Anzeigefensters bzw. Monitors vergrößert wird. Im Ergebnis hat der Anwender die Möglichkeit, gezoomte Ausschnitte des Bildes entsprechend seinen Vorstellungen auszuwählen. Die Vergrößerung zwischen Messobjekt und Monitorbild kann durch Verändern des gewählten Ausschnittes des Kamerabildes durch die Software gesteuert oder auch das Live-Bild in gleicher Weise dargestellt werden. Die Vergrößerung zwischen Messobjekt und Monitorbild kann durch Verändern des gewählten Ausschnittes des Kamerabildes verändert werden. Dies kann gegebenenfalls durch einen Drehknopf, der in das Steuerungssystem des Koordinatenmessgerätes integriert ist, oder über einen Softwareregler bedient werden. Es ist fernerhin möglich, dass bei Einsatz einer hochauflösenden Kamera das Bild bzw. der Bildausschnitt nur in der geringeren Auflösung des Monitors angezeigt wird, im Hintergrund jedoch die volle Auflösung der Kamera zur digitalen Bildverarbeitung eingesetzt wird, um die Genauigkeit zu steigern. Die wirkliche optische Vergrößerung der Abbildungsoptik der Bildverarbeitung ist hierbei relativ gering (typisch 1-fach, höchstens jedoch 5-fach) und durch die Darstellung lediglich eines Ausschnittes des hoch auflösenden Kamerabildes auf dem geringer auflösenden Monitor wird die optische Wirkung einer höheren Vergrößerung erreicht.

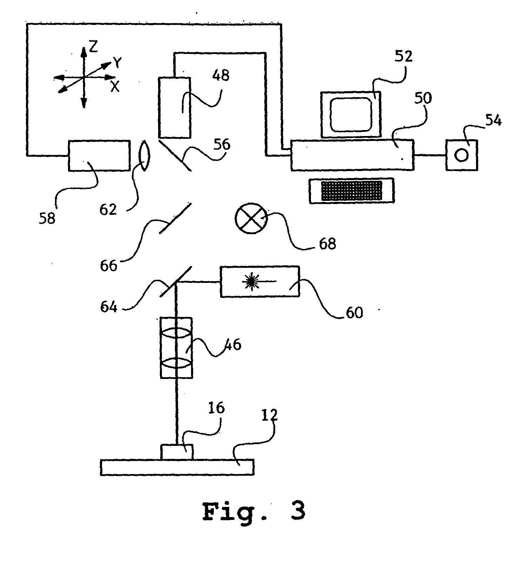

Das zuvor erläuterte Verfahren soll prinzipiell anhand der Fig. 3 erläutert werden. In der Fig. 3 ist ein Ausschnitt eines Koordinatenmessgerätes angeordnet. So ist auf dem Messtisch 12 das zu messende Objekt 16 dargestellt. Oberhalb des Messobjekts 16 sind ein Abbildungsobjektiv 46 sowie eine Kamera wie CCD-Kamera 48 angeordnet, die über einen Rechner 50 mit einem Monitor 52 verbunden ist. Durch die Hardware des Rechners 50 bzw. Rechners wird es möglich, die Auflösung zwischen der Kamera 48 und dem Monitor 52 rechnerisch anzupassen, um z. B. eine größere Kameraauflösung zu verwenden, als durch den Monitor 52 wiedergegeben werden kann. Gleichfalls ist es hierbei möglich, mit wahlfreiem Zugriff auf bestimmte Ausschnitte des Gesamtbildes zuzugreifen oder das Live- oder Beobachtungsbild des Koordinatenmessgerätes nur als Ausschnitt des Gesamtbildes auf das Format des Anzeigefensters vergrößert darzustellen. Durch die Wahl verschiedener Ausschnitte des erfassten Kamerabildes für die Darstellung auf dem Monitor 52 kommt für den Betrachter eine unterschiedlich wirksame Vergrößerung des Gesamtstrahlenganges zustande. Diese Vergrößerung kann durch Veränderung des Ausschnitts den Erfordernissen der Anwendung angepasst werden. Durch z. B. einen an den Rechner 50 angeschlossenen elektronischen Drehgeber 54 ist dieser ergonomisch bedienbar. Es kann ferner realisiert werden, dass die eigentliche Bildauswertung im Rechner 50 mit der vollen Auflösung des erfassten Kamerabildes durch die Kamera 48 erfolgt. Als typische Vergrößerung für das Messobjektiv 46 kommt hierbei eine einfache, höchstens jedoch 5-fache Vergrößerung in Frage. Eine höhere optische Vergrößerung wird durch die zuvor beschriebene Auflösungsanpassung realisiert. Durch eine zusätzliche Anordnung eines Spiegels 56 und einer weiteren Kamera 58 ist es möglich, den Auslösungsbereich noch stärker zu variieren. Die Umschaltung erfolgt ebenfalls über den Rechner 50. Es können hierbei sowohl Kameras mit verschiedener Chipgröße bei gleicher Pixelanzahl als auch mit verschiedener Pixelanzahl bei gleicher Chipgröße oder beides kombiniert verwendet werden. Zusätzlich kann ein Laserabstandssensor 60 den gleichen optischen Strahlengang verwenden.

Im Ausführungsbeispiel wird die Kamera 58 mit einer zusätzlichen Nachvergrößerungsoptik 62 ausgestattet, um den Abbildungsmaßstab zu definieren. Die im Strahlengang verwendeten optischen Teiler oder Spiegel, die in der Fig. 3 mit den Bezugszeichen 56 und 64 gekennzeichnet sind, sind so ausgelegt, dass nach der Teilung alle betroffenen Kameras 48, 58 bzw. Sensoren 60 mit der gleichen Lichtintensität ausgestattet sind. Über einen weiteren optischen Teiler 66 und eine Beleuchtungseinrichtung 68 wird ein integriertes Hellfeldauflicht realisiert. Zusätzlich zu der erläuterten Verfahrensweise kann durch Re-Sampling aus dem jeweils erfassten Kamerabild ein noch höher aufgelöstes Kamerabild mit dem Zwecke der Darstellung einer noch höheren Vergrößerung dargestellt werden. Hierbei werden jeweils zwischen real gemessenen Bildpunkten zusätzliche Bildpunkte durch Interpolation rechnerisch ermittelt.

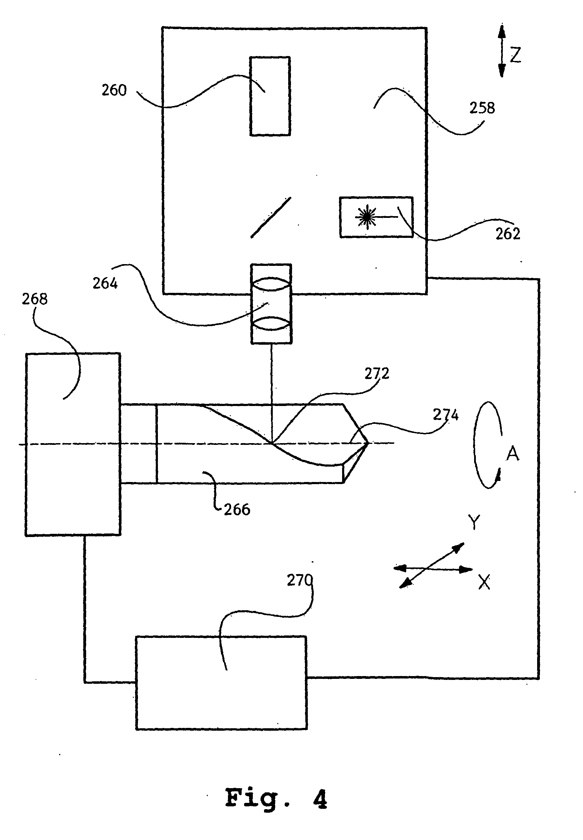

Beim Messen mit einem Bildverarbeitungssensor an Außenkanten von Werkstücken wie Schneidwerkzeugen besteht das Problem, dass der Bildverarbeitungssensor auf die zu messende Außenkante permanent nachzufokussieren ist. Um diesen Nachteil zu vermeiden, ist vorgesehen, dass zusätzlich in dem Bildverarbeitungsstrahlengang ein Laserabstandssensor integriert wird. Der Lasersensor misst in der Nähe der zu messenden Außenkante den Abstand des Bildverarbeitungssensors zur Werkstückoberfläche und ist mit einem Lageregelkreis des Koordinatenmessgerätes so verbunden, dass eine automatische Nachführung erfolgt. Der Bildverarbeitungssensor ist somit permanent fokussiert. Dies wird anhand der Fig. 4 prinzipiell verdeutlicht. An einer Z-Achse 258 eines Koordinatenmessgerätes sind zwei miteinander kombinierte Sensoren 260, 262 zur Bildverarbeitung und Laserabstandsmessung kombiniert, die über ein gemeinsames optisches System 264 Messpunkte auf einem Werkzeug 266 erfassen. Drehachse 268 des Werkzeugs 266 wird durch ein Computer- und Steuerungssystem 270 des Koordinatenmessgerätes, das auch über die Sensorsignale des Koordinatenmessgerätes verfügt, so gesteuert, dass die mit dem Laserabstandssensor 262 gemessenen Messpunkte auf einer Spanfläche 272 des Werkzeuges 266 die Einstellungen der Drehachse 268 so beeinflussen, dass die Schneidkante an diesem Ort jeweils in der Abschnittebene 274 des Werkzeuges zum Liegen kommt. Mit dem Bildverarbeitungssensor 260 des gleichen Koordinatenmessgerätes ist es dadurch möglich, die Außenkontur des entsprechenden Werkzeuges zu messen. Bei konstantem Drehen und Verfahren von X-, Y- und Z-Achse des Koordinatenmessgerätes kann dieser Vorgang kontinuierlich wiederholt werden und somit ein Scannen in allen drei Koordinaten gleichzeitig durchgeführt werden.

Bei einem erfindungsgemäßen Koordinatenmessgerät können Bildverarbeitungssensoren mit in den Strahlengang integrierten Lasersensoren zum Einsatz gelangen. Bei praktisch eingesetzten Systemen ist zu erwarten, dass die gewünschten optischen Eigenschaften für den integrierten Laserabstandssensor und den Bildverarbeitungssensor nicht bei den gleichen Einstellparametern (Arbeitsabstand / Vergrößerung) vorliegen. Durch eine zusätzlich einwechselbare Vorsatzoptik können Apertur und Arbeitsabstand des verwendeten Zoomoptiksystems alternativ für den Lasersensor und den Bildverarbeitungssensor optimiert werden.

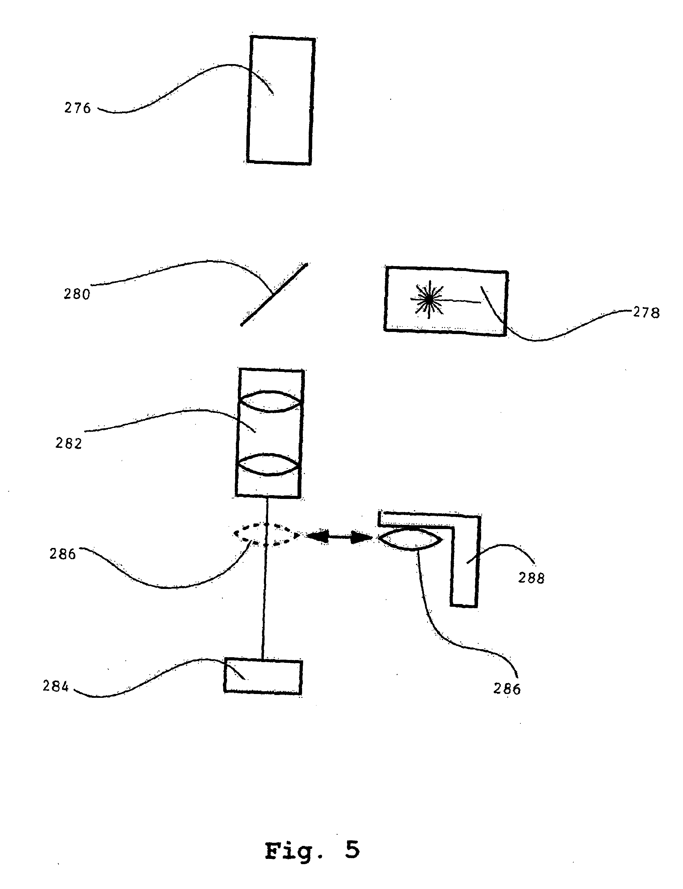

So sind in Fig. 5 ein Bildverarbeitungssensor 276 und ein Laserabstandssensor 278 dargestellt, die über einen Strahlenteiler 280 mit einem gemeinsamen Messobjektiv 282 in einem Koordinatenmessgerät eingesetzt sind. Dabei soll ein Messobjekt 284 angetastet, also im vorliegenden Fall berührungslos gemessen werden. Durch Einwechseln einer zusätzlichen Voroptik oder Vorsatzoptik 286, die in einer Wechselstation 288 abgelegt werden kann, besteht die Möglichkeit, die optischen Eigenschaften des Gesamtstrahlengangs zu verändern. Dieser wird durch das Messobjektiv 282 und bei in dessen Strahlengang befindlicher oder nicht befindlicher Voroptik bzw. Vorsatzoptik 286 bestimmt. Hierdurch kann eine Optimierung der Einstellparameter für den Laserabstandssensor 278 bei vorgeschalteter Voroptik 286 bzw. für den Bildverarbeitungssensor 276 bei entfernter Voroptik bzw. Vorsatzoptik 286 oder umgekehrt erfolgen.

## Patentansprüche

1. Verfahren zum Messen von Werkstückgeometrien mit einem Koordinatenmessgerät mit beweglichen Verfahrachsen und zumindest einer Bildverarbeitungssensorik mit Zoomoptik und einer in die Bildverarbeitungssensorik integrierten Laserabstandssensorik mit Laserabstandsoptik zur Erfassung von Messpunkten auf Werkstückoberflächen, wobei die Laserabstandsoptik und die Zoomoptik einen gemeinsamen Strahlengang verwenden,
**dadurch gekennzeichnet,**
**dass** in den gemeinsamen Strahlengang eine in dem Koordinatenmessgerät vorhandene Vorsatzoptik eingewechselt wird, über die Apertur und/oder Arbeitsabstand von Laserabstandssensorik und Bildverarbeitungssensorikoptik verändert wird.

2. Verfahren nach Anspruch 1,
**dadurch gekennzeichnet,**
**dass** der Arbeitsabstand der verwendeten Zoom-Optik verstellbar ist.

3. Verfahren nach Anspruch 1 oder 2,
**dadurch gekennzeichnet,**
**dass** das optische System durch Einwechseln der Vorsatzoptik für den Betrieb der Laserabstandssensorik optimiert wird.

4. Verfahren nach zumindest einem der Ansprüche 1 bis 3,
**dadurch gekennzeichnet,**
**dass** die Vorsatzoptik über eine Magnetschnittstelle mit der Zoom-Optik verbunden wird.

5. Verfahren nach zumindest einem der Ansprüche 1 bis 4,
**dadurch gekennzeichnet,**
**dass** die Vorsatzoptik über einen auch für taktile Sensoren eingesetzten Tasterwechsler eingewechselt wird.

6. Koordinatenmessgerät zum Messen von Werkstückgeometrien, umfassend mehrere bewegliche Verfahrsachsen und zumindest eine Bildverarbeitungssensorik (276) mit Zoom-Optik (282) und einer integrierten Laserabstandssensorik (278) mit Laserabstandsoptik (278) zur Erfassung von Messpunkten auf zumindest einer Oberfläche des Werkstücks (284), wobei die Laserabstandsoptik und die Zoom-Optik einen gemeinsamen Strahlengang bilden,
**dadurch gekennzeichnet,**
**dass** das Koordinatenmessgerät eine in den gemeinsamen Strahlengang wahlweise einwechselbare Vorsatzoptik (286) aufweist, über die Apertur und/oder Arbeitsabstand von Laserabstandssensorik und Bildverarbeitungssensorikoptik veränderbar ist.

7. Koordinatenmessgerät nach Anspruch 6,
**dadurch gekennzeichnet,**
**dass** Arbeitsabstand der verwendeten Zoom-Optik (282) durch Verstellung von Linsengruppen verstellbar ist.

8. Koordinatenmessgerät nach Anspruch 6 oder 7,
**dadurch gekennzeichnet,**
**dass** das optische System durch Einwechseln der Vorsatzoptik (286) für den Betrieb der Laserabstandssensorik (278) optimiert ist.

9. Koordinatenmessgerät nach zumindest einem der Ansprüche 6 bis 8,
**dadurch gekennzeichnet,**
**dass** die Vorsatzoptik (286) über eine Magnetschnittstelle mit der Zoom-Optik (282) verbunden ist.

10. Koordinatenmessgerät nach zumindest einem der Ansprüche 6 bis 9,
**dadurch gekennzeichnet,**
**dass** die Vorsatzoptik (286) über einen für taktile Sensoren eingesetzten Tasterwechsler passfähig ist.

## Claims

1. Method for measuring workpiece geometries with a coordinate measuring device with movable transverse axes and at least one image processing sensor with zoom optic and a laser distance sensor with a laser distance optic integrated in the image processing sensor for recording measuring points on workpiece surfaces, wherein the laser distance optic and the zoom optic use a mutual beam path,
**characterized in that**
a preoptics existent in the coordinate measuring device is exchanged in the mutual beam path via which aperture and/or working distance of laser distance sensor and image processing sensor optic is modified.

2. Method according to claim 1,
**characterized in that**
the working distance of the used zoom optic is adjustable.

3. Method according to claim 1 or 2,
**characterized in that**
the optical system is optimized by exchanging the preoptics for the operation of the laser distance sector.

4. Method according to at least one of the claims 1 to 3,
**characterized in that**
the preoptics is connected to the zoom optic via a magnetic interface.

5. Method according to at least one of the claims 1 to 4,
**characterized in that**
the preoptics is exchanged via a sensor device exchanger also used for tactile sensors.

6. A coordinate measuring device for measuring workpiece geometries, comprising several movable transverse axes and at least one image processing sensor (276) with zoom optic (282) and an integrated laser distance sensor (278) with laser distance optic (278) for recording measuring points on at least one surface of the workpiece (284), wherein the laser distance optic and the zoom optic form a mutual beam path,
**characterized in that**
the coordinate measuring device comprises a preoptics (286) that is selectively exchangeable in the mutual beam path via which aperture and/or working distance of laser distance sensor and image processing sensor optic is modifiable.

7. A coordinate measuring device according to claim 6,
**characterized in that**
the working distance of the used zoom optic (282) is adjustable by adjusting lens groups.

8. A coordinate measuring device according to claim 6 or 7,
**characterized in that**
the optical system is optimized for the operation of the laser distance sensor (278) by exchanging the preoptics (286).

9. A coordinate measuring device according to at least one of the claims 6 to 8,
**characterized in that**
the preoptics (286) is connected to the zoom optic (282) via a magnetic interface.

10. A coordinate measuring device according to at least one of the claims 6 to 9,
**characterized in that**
the preoptics (286) is adaptable by means of a sensor device exchanger used for tactile sensors.

## Revendications

1. Procédé destiné à mesurer des géométries de pièces d'oeuvre avec un appareil de mesure de coordonnées comprenant des axes de déplacement mobiles et au moins un système de capteurs de traitement d'image avec objectif à focale variable et un système de détection de distance à laser avec optique laser télémétrique intégré dans le système de capteurs de traitement d'image afin de saisir des points de mesure sur la surface de la pièce d'oeuvre, sachant que l'optique laser télémétrique et l'objectif à focale variable utilisent une trajectoire de faisceau commune,
**caractérisé en ce**
**que** dans la trajectoire de faisceau commune est intercalée une optique additionnelle présente dans l'appareil de mesure de coordonnées, au moyen de laquelle est modifiée l'ouverture et/ou la distance de travail du système de détection de distance à laser et de l'optique du système de capteurs de traitement d'image.

2. Procédé selon la revendication 1,
**caractérisé en ce**
**que** la distance de travail de l'objectif à focale variable utilisé est réglable.

3. Procédé selon la revendication 1 ou 2,
**caractérisé en ce**
**que** le système optique est optimisé pour le fonctionnement du système de détection de distance à laser par intercalation de l'optique additionnelle.

4. Procédé selon au moins une des revendications 1 à 3,
**caractérisé en ce**
**que** l'optique additionnelle est reliée à l'objectif à focale variable par une interface magnétique.

5. Procédé selon au moins une des revendications 1 à 4,
**caractérisé en ce**
**que** l'optique additionnelle est intercalée au moyen d'un changeur de palpeurs également utilisé pour des capteurs tactiles.

6. Appareil de mesure de coordonnées destiné à mesurer des géométries de pièces d'oeuvre, comprenant plusieurs axes de déplacement mobiles et au moins un système de capteurs de traitement d'image (276) avec objectif à focale variable (282) et un système intégré de détection de distance à laser (278) avec optique laser télémétrique (278) afin de saisir des points de mesure sur au moins une surface de la pièce d'oeuvre (284), sachant que l'optique laser télémétrique et l'objectif à focale variable forment une trajectoire de faisceau commune,
**caractérisé en ce**
**que** l'appareil de mesure de coordonnées présente une optique additionnelle (286) intercalable à volonté dans la trajectoire de faisceau commune et au moyen de laquelle peut être modifiée l'ouverture et/ou la distance de travail du système de détection de distance à laser et de l'optique du système de capteurs de traitement d'image.

7. Appareil de mesure de coordonnées selon la revendication 6,
**caractérisé en ce**
**que** la distance de travail de l'objectif à focale variable utilisé (282) est réglable par déplacement de groupes de lentilles.

8. Appareil de mesure de coordonnées selon la revendication 6 ou 7,
**caractérisé en ce**
**que** le système optique est optimisé pour le fonctionnement du système de détection de distance à laser (278) par intercalation de l'optique additionnelle (286).

9. Appareil de mesure de coordonnées selon au moins une des revendications 6 à 8,
**caractérisé en ce**
**que** l'optique additionnelle (286) est reliée à l'objectif à focale variable (282) par une interface magnétique.

10. Appareil de mesure de coordonnées selon au moins une des revendications 6 à 9,
**caractérisé en ce**
**que** l'optique additionnelle (286) est ajustable au moyen d'un changeur de palpeurs utilisé pour des capteurs tactiles.
